# FASCICULE DE BREVET EUROPEEN

(11) **EP 4 059 843 B1**
(45) Date de publication et mention de la délivrance du brevet: **06.08.2025**
(21) Numéro de dépôt: 22160875.5
(22) Date de dépôt: 08.03.2022
(51) Int. Cl.: B64D 15/14, F02C 7/047, H05B 3/20

(54) **PROCÉDÉ DE FONCTIONNEMENT D'UN SYSTÈME DE TRAITEMENT DU GIVRE COMBINANT AU MOINS DEUX TAPIS CHAUFFANTS ET PAROI EXTÉRIEURE D'AÉRONEF COMPRENANT UN SYSTÈME DE TRAITEMENT DU GIVRE FONCTIONNANT SELON CE PROCÉDÉ**
VERFAHREN ZUM BETRIEB EINES ENTEISUNGSSYSTEMS, DAS MINDESTENS ZWEI HEIZMATTEN KOMBINIERT, UND AUSSENWAND EINES LUFTFAHRZEUGS, DAS EIN ENTEISUNGSSYSTEM ENTHÄLT, DAS NACH DIESEM VERFAHREN ARBEITET
OPERATING METHOD OF A FROST TREATMENT SYSTEM COMBINING AT LEAST TWO HEATING MATS AND OUTER WALL OF AN AIRCRAFT COMPRISING A FROST TREATMENT SYSTEM OPERATING ACCORDING TO SAID METHOD

(30) Priorité: 16.03.2021 FR 2102587
(43) Date de publication de la demande: 21.09.2022
(73) Titulaire: Airbus Operations (S.A.S.), 31060 Toulouse Cedex 9 (FR)
(72) Inventeur: CREBASSOL, Florent, 31670 LABEGE (FR); CROIXMARIE, Morgan, 31700 BLAGNAC (FR); MAGNON, Rémi, 31700 BLAGNAC (FR); HUET, Florent, 31060 TOULOUSE (FR)
(74) Mandataire: Fantin, Laurent

(56) Documents cités:
- EP-B1- 2 650 219
- GB-A- 1 117 843
- US-A- 5 351 918
- US-A1- 2010 199 629

## Description

La présente demande se rapporte à un procédé de fonctionnement d'un système de traitement du givre combinant au moins deux tapis chauffants ainsi qu'à une paroi extérieure d'aéronef comprenant un système de traitement du givre fonctionnant selon ce procédé. Selon un mode de réalisation décrit dans le document US2010/199629, une entrée d'air d'une nacelle d'aéronef comprend un dispositif de type électrique pour le traitement du givre. Selon des premiers modes de réalisation, l'entrée d'air comprend plusieurs tapis 6a à 6d décalés de l'amont vers l'aval selon le sens d'écoulement de l'air dans la nacelle. Selon un autre mode de réalisation, l'entrée d'air comprend plusieurs secteurs 201 à 212 répartis selon la circonférence de la nacelle.

Selon un mode de fonctionnement, chaque tapis fonctionne en mode dégivrage, selon des séquences en créneaux, à un premier niveau d'énergie pendant une durée T0 à T3, puis à un deuxième niveau d'énergie (qui peut être nul) pendant la période T3 à T0 suivante. Lorsque le tapis fonctionne au premier niveau d'énergie, ce premier niveau d'énergie provoque :
- pendant la durée T0 à T1, une élévation de température au niveau de la surface extérieure,
- pendant la durée T1 à T2, une stagnation de la température, l'eau solide (givre ou glace) au niveau de la surface extérieure changeant de phase et devenant liquide,
- pendant la durée T2 à T3, de nouveau une augmentation de température au niveau de la surface extérieure lorsque le givre ou la glace a disparu au niveau de la surface de extérieure.

Lorsque le tapis fonctionne au deuxième niveau, la température au niveau de la surface extérieure diminue progressivement. Par conséquent, la présence de givre ou de glace est tolérée pendant la période T4 à T0 et T0 à T1 d'un cycle.

Selon un mode de fonctionnement, les différents tapis répartis selon la circonférence, secteur par secteur, sont successivement activés et désactivés. Par conséquent, lorsque le tapis d'un secteur n'est pas activé, ce secteur est soumis à la formation de givre.

Les modes de fonctionnement décrits dans le document US2010/199629 ne permettent pas d'obtenir une fonction antigivre en permanence sur une zone donnée.

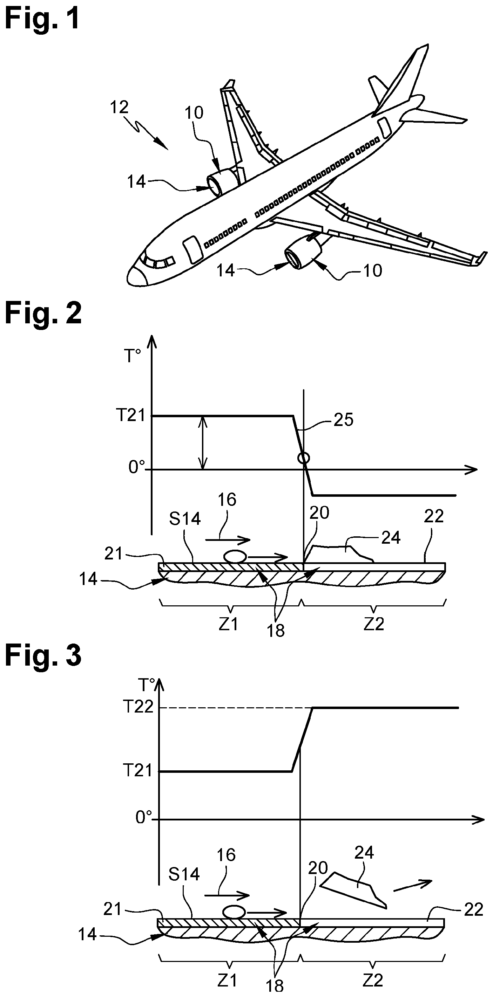

Selon un mode de réalisation visible sur les figures 1 à 3, une entrée d'air d'une nacelle 10 d'un aéronef 12 comprend un bord d'attaque 14 qui présente une surface S14 sur laquelle s'écoule un flux d'air 16 de l'amont vers l'aval. Ce bord d'attaque 14 comprend un système de traitement du givre 18 recouvrant des première et deuxième zones Z1 et Z2 de la surface S14, la deuxième zone Z2 étant située en aval de la zone Z1, les première et deuxième zones Z1, Z2 étant adjacentes et séparées par une ligne de jonction 20. Ces zones Z1 et Z2 sont connues et imposées lors de la conception de la nacelle, notamment en fonction des caractéristiques du moteur intégré dans la nacelle.

Le système de traitement du givre 18 est configuré pour empêcher la formation de givre sur la première zone Z1 et tolérer de petits amas de givre ou de glace sur la deuxième zone Z2 si ces derniers sont régulièrement détachés.

Le système de traitement du givre 18 comprend un premier tapis chauffant 21 recouvrant la première zone Z1 jusqu'à la ligne de jonction 20 et un deuxième tapis chauffant 22 recouvrant la deuxième zone Z2 à partir de la ligne de jonction 20, décalé vers l'aval par rapport au premier tapis chauffant 21. Les premier et deuxième tapis chauffants 21, 22 peuvent être accolés l'un à l'autre ou être faiblement espacés au niveau de la ligne de jonction 20. Comme illustré sur les figures 2 et 3, lorsque le premier ou deuxième tapis chauffant 21, 22 fonctionne à une température donnée, celle-ci est sensiblement constante sur quasiment toute la surface du tapis chauffant 21, 22 sauf au niveau des bords du tapis chauffant 21, 22 où la température présente un gradient de température.

Le deuxième tapis chauffant 22 fonctionne en mode dégivrage. Son mode de fonctionnement comprend deux phases :
- une première phase, visible sur la figure 2, lors de laquelle le deuxième tapis chauffant 22 n'est pas activé,
- une deuxième phase, visible sur la figure 3, lors de laquelle le deuxième tapis chauffant 22 est activé.

Lors de la première phase, la température au niveau de la surface S14 au droit du deuxième tapis chauffant 22 peut être négative rendant possible la formation d'au moins un petit amas de givre ou de glace 24 sur la deuxième zone Z2. Lors de la deuxième phase, le deuxième tapis chauffant 22 est activé et génère, au niveau de la surface S14 au droit du deuxième tapis chauffant 22, une température élevée T22 provoquant un détachement brusque des petits amas de givre ou de glace 24 présents sur la deuxième zone Z2. Selon ce mode de fonctionnement, le deuxième tapis chauffant 22 est activé pendant des durées courtes, régulièrement espacées dans le temps. A titre indicatif, le deuxième tapis chauffant 22 est activé de l'ordre de 10% du temps.

Pour empêcher la formation de givre, le premier tapis chauffant 21 fonctionne en mode antigivrage. Comme illustré sur les figures 2 et 3, la température sur la zone Z1 doit toujours être positive. Le deuxième tapis chauffant 22 ne fonctionnant pas continuellement et la température sur la zone Z2 pouvant être négative, le premier tapis chauffant 21 fonctionne continuellement à une température T21 élevée pour que la température au niveau de son bord orienté vers le deuxième tapis chauffant 22 soit positive, même si elle présente un gradient de température 25, afin de garantir une température positive jusqu'à la ligne de jonction 20.

Pour chacun des premier et deuxième tapis chauffants 21, 22, la consommation énergétique étant fonction de la température produite, les modes de fonctionnement des premier et deuxième tapis chauffants 21, 22 conduisent à une consommation énergétique élevée.

La présente invention vise à remédier à tout ou partie des inconvénients de l'art antérieur.

A cet effet, l'invention a pour objet un procédé de fonctionnement d'un système de traitement du givre recouvrant une surface d'un aéronef sur laquelle s'écoule un flux d'air d'amont en aval en fonctionnement, ladite surface comportant des première et deuxième zones adjacentes et séparées par une ligne de jonction. Le système de traitement du givre est configuré pour, en fonctionnement, empêcher la formation de givre sur la première zone et temporairement tolérer de petits amas de givre ou de glace sur la deuxième zone, le système de traitement du givre comprenant au moins deux tapis chauffants parmi :
- un premier tapis chauffant, recouvrant la première zone, configuré pour occuper un premier état lors duquel le premier tapis chauffant est alimenté électriquement à un premier niveau d'énergie de manière à maintenir une première température positive sur la première zone de la surface,
- un deuxième tapis chauffant, recouvrant partiellement la deuxième zone, configuré pour occuper alternativement un état activé assurant un dégivrage au niveau de la surface au droit du deuxième tapis chauffant ainsi qu'un état désactivé dans lequel le deuxième tapis chauffant n'assure pas de dégivrage au niveau de la surface, le deuxième tapis chauffant étant positionné en aval du premier tapis chauffant.

Selon l'invention :
- le premier tapis chauffant recouvre une zone intermédiaire de la deuxième zone,
- le premier niveau d'énergie est ajusté de manière à autoriser la formation de givre sur au moins une partie de la zone intermédiaire,
- le premier tapis chauffant est configuré pour occuper au moins un deuxième état lors duquel le premier tapis chauffant est alimenté électriquement à un deuxième niveau d'énergie ajusté de manière à engendrer une température positive sur la zone intermédiaire,
- le procédé de fonctionnement comprend un basculement du premier tapis chauffant du premier état vers le deuxième état juste avant ou en même temps qu'un basculement du deuxième tapis chauffant de l'état désactivé à l'état activé.

Cette solution permet de réduire la consommation énergétique du premier tapis chauffant en réduisant le niveau d'énergie auquel il est alimenté la majorité du temps. Cette solution permet aussi de réduire la somme de la consommation instantanée des premier et deuxième tapis chauffants, à l'exception de la période courte durant laquelle le premier tapis chauffant est dans le deuxième état.

Selon une autre caractéristique, le procédé de fonctionnement comprend :
- une première période lors de laquelle le premier tapis chauffant occupe le premier état et le deuxième tapis chauffant est à l'état désactivé,
- une deuxième période lors de laquelle le premier tapis chauffant occupe le deuxième état et le deuxième tapis chauffant est à l'état désactivé,
- une troisième période lors de laquelle le premier tapis chauffant occupe le premier état et le deuxième tapis chauffant est à l'état activé.

Selon une autre caractéristique, le premier tapis chauffant est dans le deuxième état pendant des durées courtes, régulièrement espacées dans le temps.

L'invention a également pour objet une paroi extérieure d'un aéronef comprenant une surface sur laquelle s'écoule un flux d'air d'amont en aval en fonctionnement, ladite surface comportant des première et deuxième zones, les première et deuxième zones étant adjacentes et séparées par une ligne de jonction, la paroi extérieure comportant au moins un système de traitement du givre recouvrant la surface configuré pour, en fonctionnement, empêcher la formation de givre sur la première zone et temporairement tolérer de petits amas de givre ou de glace sur la deuxième zone.

Le système de traitement du givre comprend au moins deux tapis chauffants parmi un premier tapis chauffant recouvrant la première zone, un deuxième tapis chauffant recouvrant partiellement la deuxième zone et positionné en aval du premier tapis chauffant, au moins une alimentation en énergie reliée aux premier et deuxième tapis chauffants ainsi qu'une commande pilotant l'alimentation en énergie.

Selon l'invention, le premier tapis chauffant recouvre une zone intermédiaire de la deuxième zone. En complément, la commande est paramétrée pour contrôler l'alimentation en énergie afin que ladite alimentation en énergie fournisse :
- au premier tapis, de manière alternée, pendant une première période, un premier niveau d'énergie ajusté de manière à empêcher une formation de givre ou de glace sur la première zone, pendant une deuxième période, un deuxième niveau d'énergie supérieur au premier niveau d'énergie, et
- au deuxième tapis, pendant une troisième période, un niveau d'énergie ajusté pour provoquer un dégivrage au moins au niveau du deuxième tapis, le reste du temps le deuxième tapis n'étant pas alimenté.

Selon une autre caractéristique, la troisième période est postérieure à la deuxième période. Selon une autre caractéristique, les deuxième et troisième périodes ont sensiblement les mêmes durées.

Selon une autre caractéristique la deuxième période représente moins de 25% de la somme des première et deuxième périodes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique d'une surface équipée d'un système de traitement du givre et d'une courbe de température en surface illustrant une première phase d'un mode de fonctionnement selon l'art antérieur,
- La figure 3 est une représentation schématique d'une surface équipée d'un système de traitement du givre et d'une courbe de température en surface illustrant une deuxième phase d'un mode de fonctionnement selon l'art antérieur,
- La figure 4 est une représentation schématique d'une surface équipée d'un système de traitement du givre et d'une courbe de température en surface illustrant une première période d'un mode de fonctionnement selon l'invention,
- La figure 5 est une représentation schématique d'une surface équipée d'un système de traitement du givre et d'une courbe de température en surface illustrant une deuxième période d'un mode de fonctionnement selon l'invention,
- La figure 6 est une représentation schématique d'une surface équipée d'un système de traitement du givre et d'une courbe de température en surface illustrant une troisième période d'un mode de fonctionnement selon l'invention,
- La figure 7 est un schéma illustrant les consommations énergétiques de systèmes de traitement du givre fonctionnant selon l'art antérieur et selon l'invention.

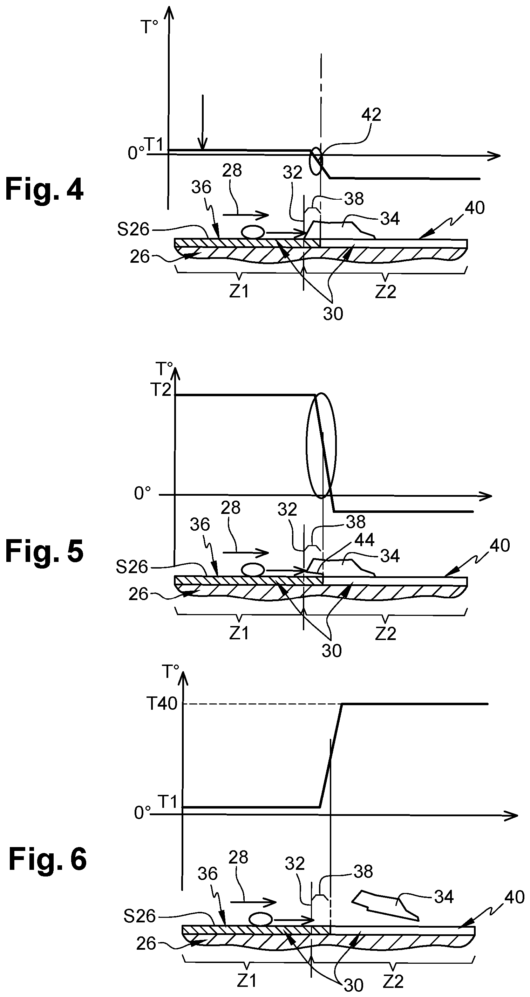

Sur les figures 4 à 6, une paroi 26 présente une surface S26 sur laquelle s'écoule un flux d'air 28 de l'amont vers l'aval. Cette paroi 26 comprend, au niveau de la surface S26, au moins un système de traitement du givre 30.

Selon une application, la paroi 26 est une paroi extérieure d'un aéronef et fait partie d'un bord d'attaque, comme un bord d'attaque d'une entrée d'air d'une nacelle ou un bord d'attaque d'une aile par exemple. L'invention n'est pas limitée à ces applications.

Cette surface S26 comprend des première et deuxième zones Z1 et Z2, la deuxième zone Z2 étant située en aval de la zone Z1, les première et deuxième zones Z1, Z2 étant adjacentes et séparées par une ligne de jonction 32.

Le système de traitement du givre 30 est configuré pour, en fonctionnement, empêcher la formation de givre sur la première zone Z1 et temporairement tolérer de petits amas de givre ou de glace 34 sur la deuxième zone Z2 si ces derniers sont régulièrement détachés.

Selon un mode de réalisation, le système de traitement du givre 30 comprend au moins deux tapis chauffants, un premier tapis chauffant 36 recouvrant la première zone Z1 et une zone intermédiaire 38 de la deuxième zone Z2 adjacente à la première zone Z1 ainsi qu'un deuxième tapis chauffant 40 recouvrant la deuxième zone Z2 à l'exception de la zone intermédiaire 38, décalé vers l'aval par rapport au premier tapis 36 chauffant électrique, les premier et deuxième tapis chauffants 36 et 40 étant juxtaposés ou faiblement espacés au niveau de la ligne de jonction 32.

Ainsi, le premier tapis chauffant 36 s'étend au-delà de la ligne de jonction 32 et le deuxième tapis chauffant 40 est espacé de la ligne de jonction 32.

Chacun des premier et deuxième tapis chauffants 36, 40 peut comprendre un ou plusieurs tapis chauffants fonctionnant de la même manière.

Les premier et deuxième tapis chauffants 36, 40 comprennent chacun au moins un circuit électrique provoquant une montée en température par effet Joule. Lorsque le premier ou deuxième tapis chauffant 36, 40 fonctionne à une température donnée, celle-ci est sensiblement constante sur quasiment toute la surface du premier ou deuxième tapis chauffant 36, 40 sauf au niveau des bords du premier ou deuxième tapis chauffant 36, 40 où la température présente un gradient de température.

Les premier et deuxième tapis chauffants 36, 40 ne sont pas plus décrits car ils peuvent être identiques à ceux de l'art antérieur.

Le deuxième tapis chauffant 40 est configuré pour occuper un état activé lors duquel le deuxième tapis chauffant 40 est alimenté électriquement de manière à atteindre, au niveau de la surface S26 au droit du deuxième tapis chauffant 40, une température de dégivrage T40 ainsi qu'un état désactivé lors duquel le deuxième tapis chauffant 40 n'est pas alimenté électriquement et ne provoque aucune élévation de température au niveau de la surface S26, cette dernière étant à une température qui est généralement négative lorsque l'aéronef est en vol dans des conditions givrantes.

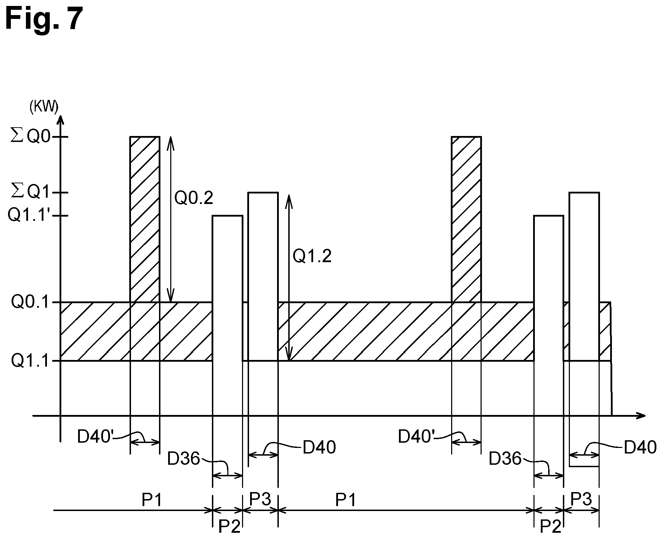

Le deuxième tapis chauffant 40 fonctionne en mode dégivrage. Son mode de fonctionnement comprend deux phases, une première phase froide, visible sur les figures 4 et 5, lors de laquelle le deuxième tapis chauffant 40 est à l'état désactivé, ainsi qu'une deuxième phase chaude, visible sur la figure 6, lors de laquelle le deuxième tapis chauffant 40 est à l'état activé. Lors de la première phase, la température au niveau de la surface S26 au droit du deuxième tapis chauffant 40 est négative, rendant possible la formation d'au moins un petit amas de givre ou de glace 34 sur la surface S26. Lors de la deuxième phase, le deuxième tapis chauffant 40 est à l'état activé et génère, au niveau de la surface S26 au droit du deuxième tapis chauffant 40, une température élevée T40 provoquant un détachement brusque des petits amas de givre ou de glace 34 présents sur la deuxième zone Z2. Selon une configuration visible sur la figure 7, le deuxième tapis chauffant 40 est à l'état activé pendant des durées D40 courtes, régulièrement espacées dans le temps. Par courte, on entend que le deuxième tapis chauffant 40 est à l'état activé moins de 25% du temps en fonctionnement. A titre indicatif, le deuxième tapis chauffant 40 est à l'état activé de l'ordre de 10% du temps, comme pour l'art antérieur. Ce pourcentage peut évoluer en fonction des conditions climatiques et des besoins en dégivrage.

Plus globalement, le deuxième tapis chauffant 40 est configuré pour occuper alternativement un premier état assurant un dégivrage au niveau de la surface S26 au droit du deuxième tapis chauffant 40 ainsi qu'un deuxième état dans lequel il n'assure pas de dégivrage au niveau de la surface S26 au droit du deuxième tapis chauffant 40.

Selon une particularité de l'invention, le premier tapis chauffant 36 est configuré pour occuper alternativement un premier état lors duquel le premier tapis chauffant 36 est alimenté électriquement à un premier niveau d'énergie de manière à maintenir, sur la première zone Z1 de la surface S26, une première température T1 positive et une température pas nécessairement positive autorisant la formation de givre au niveau de la zone intermédiaire 38 au-delà de la première zone Z1, ainsi qu'au moins un deuxième état lors duquel le premier tapis chauffant 36 est alimenté électriquement à un deuxième niveau d'énergie de manière à atteindre, au niveau de la surface S26 au droit du premier tapis chauffant 36, une deuxième température T2, supérieure à la première température T1, engendrant une température positive au niveau de la surface S26 au droit de la zone intermédiaire 38. Ainsi, le premier niveau d'énergie est ajusté de manière à ce que la surface S26 présente une température pas nécessairement positive, autorisant la formation de givre sur au moins une partie de la zone intermédiaire 38. Le deuxième niveau d'énergie est ajusté de manière à engendrer une température positive au niveau de la surface S26 sur toute la zone intermédiaire 38.

Le premier tapis chauffant 36 fonctionne selon un mode de fonctionnement comprenant au moins deux phases, une première phase tiède, visible sur les figures 4 et 6, lors de laquelle le premier tapis chauffant 36 est dans le premier état, ainsi qu'une deuxième phase dégivrante, visible sur la figure 5, lors de laquelle le premier tapis chauffant 36 est dans le deuxième état. Lors de la première phase tiède, la température sur la zone Z1 est sensiblement égale à la première température T1 positive empêchant la formation de givre. Toutefois, cette première température T1 présente un gradient de température 42 et n'est pas suffisante pour empêcher la formation de givre ou de glace sur la zone intermédiaire 38, comme illustré sur la figure 4. Lors de la deuxième phase dégivrante, le premier tapis chauffant 36 génère, au niveau de la surface S26 au droit du premier tapis chauffant 36, une deuxième température T2 élevée provoquant la fonte au moins partielle de chaque amas de givre ou de glace 34 présent sur la zone intermédiaire 38. Ainsi, comme illustré sur la figure 5, l'interface entre chaque amas de givre ou de glace 34 et la surface S26 est rompue au niveau de la zone intermédiaire 38. Ainsi, chaque amas de givre ou de glace présent uniquement sur la zone intermédiaire 38 se détache de la surface S26. En complément, chaque amas de givre ou de glace 34 positionné sur la zone intermédiaire 38 et au droit du deuxième tapis chauffant 40 comprend un décrochement 44, en amont de l'amas de givre ou de glace 34, au droit de la zone intermédiaire 38, au niveau de son interface avec la surface S26, favorisant le détachement de l'amas de givre ou de glace 34 en raison de l'écoulement du flux d'air 28 de l'amont vers l'aval lorsque le deuxième tapis chauffant 40 est à l'état activé.

Selon une configuration visible sur la figure 7, le premier tapis chauffant 36 est dans le deuxième état pendant des durées D36 courtes, régulièrement espacées dans le temps. Par courte, on entend que le premier tapis chauffant 36 est dans le deuxième état moins de 25% du temps en fonctionnement. A titre indicatif, le premier tapis chauffant 36 est dans le deuxième état de l'ordre de 10% du temps, le premier tapis chauffant 36 étant dans le premier état en dehors des durées D36. Ce pourcentage peut évoluer en fonction des conditions climatiques et des besoins en dégivrage.

Comme illustré sur la figure 7, le procédé de fonctionnement comprend un basculement du premier tapis chauffant 36 du premier état vers le deuxième état avant un basculement du deuxième tapis chauffant 40 de l'état désactivé à l'état activé. Selon une configuration, le procédé de fonctionnement comprend un basculement du premier tapis chauffant 36 du deuxième état vers le premier état juste avant ou en même temps qu'un basculement du deuxième tapis chauffant 40 de l'état désactivé à l'état activé.

Selon une configuration, le premier tapis chauffant 36 est maintenu dans le deuxième état pendant une durée D36 sensiblement égale à la durée D40 pendant laquelle le deuxième tapis chauffant 40 est maintenu à l'état activé.

Selon une caractéristique de l'invention visible sur la figure 7, le procédé de fonctionnement du système de traitement du givre 30 comprend trois périodes, une première période P1 lors de laquelle le premier tapis chauffant 36 occupe le premier état et le deuxième tapis chauffant 40 est à l'état désactivé, comme illustré sur la figure 4, une deuxième période P2 lors de laquelle le premier tapis chauffant 36 occupe le deuxième état et le deuxième tapis chauffant 40 est à l'état désactivé, comme illustré sur la figure 5, ainsi qu'une troisième période P3 lors de laquelle le premier tapis chauffant 36 occupe le premier état et le deuxième tapis chauffant est à l'état activé, comme illustré sur la figure 6.

Ainsi, pendant les trois périodes P1, P2, P3, le givre ne se forme pas sur la première zone Z1. Pendant la première période P1, du givre ou de la glace peuvent se former au-delà de la zone Z1, notamment sur la zone intermédiaire 38. Pendant la deuxième période P2, l'interface entre chaque amas de givre ou de glace 34 présent au niveau de la zone intermédiaire 38 et la surface S26 est rompue. Pendant la troisième période P3, les amas de givre ou de glace 34 présents sur la deuxième zone Z2 sont détachés, notamment sur la zone intermédiaire 38. Le premier tapis chauffant 36 n'ayant pas besoin de maintenir une température positive jusqu'à son bord aval jouxtant le deuxième tapis chauffant 40 mais seulement sur la première zone Z1 qui est écartée du deuxième tapis chauffant 40 et du bord aval du premier tapis chauffant 36, la température T1 est nettement inférieure à la température T21 générée par le premier tapis chauffant 21 fonctionnant selon un mode de fonctionnement de l'art antérieur. La consommation énergétique des tapis chauffants étant fonction de la température qu'ils génèrent, la température T1 étant nettement inférieure à la température T21 en dehors des durées D36, la consommation énergétique Q1.1 du premier tapis chauffant 36 est nettement inférieure à la consommation énergétique Q0.1 d'un premier tapis chauffant fonctionnant selon le mode de fonctionnement de l'art antérieur. Lorsque le premier tapis chauffant 36 est dans le deuxième état pendant les durées D36 courtes, la consommation énergétique Q1.1' du premier tapis chauffant 36 est supérieure à la consommation énergétique Q0.1 d'un premier tapis chauffant fonctionnant selon le mode de fonctionnement de l'art antérieur pour les mêmes durées. Toutefois, globalement, la consommation énergétique du premier tapis chauffant 36 fonctionnant selon le mode de fonctionnement de l'invention est inférieure à celle d'un premier tapis chauffant fonctionnant selon le mode de fonctionnement de l'art antérieur, comme illustré sur la figure 7.

La température générée par le deuxième tapis chauffant 40 lorsqu'il est à l'état activé peut être égale à celle d'un deuxième tapis à l'état activé fonctionnant selon un mode de fonctionnement de l'art antérieur. Par conséquent, la consommation énergétique Q1.2 du deuxième tapis chauffant 40 pendant les durées D40 durant lesquelles il est à l'état activé est identique à la consommation énergétique Q0.2 d'un deuxième tapis chauffant fonctionnant pendant une durée D40' selon le mode de fonctionnement de l'art antérieur, comme illustré sur la figure 7. Cependant, la somme des consommations énergétiques ∑Q1=Q1.1+Q1.2 des premier et deuxième tapis chauffants 36, 40 pendant la troisième période P3 est inférieure à la somme des consommations énergétiques ∑Q0=Q0.1+Q0.2 des premier et deuxième tapis chauffants 21, 22 fonctionnant selon un mode de fonctionnement de l'art antérieur pendant la même période de dégivrage de la zone Z2.

Quel que soit le mode de réalisation, le système de traitement du givre comprend au moins une alimentation en énergie reliée aux tapis chauffants 36, 40 du système de traitement du givre ainsi qu'une commande pilotant l'alimentation en énergie pour qu'elle transmette à chaque tapis, pendant des périodes P1, P2, P3 données, les niveaux d'énergie requis.

La commande est paramétrée pour contrôler l'alimentation afin que cette dernière fournisse :
- au premier tapis 36, de manière alternée, pendant une première période P1, un premier niveau d'énergie ajusté de manière à empêcher une formation de givre ou de glace sur la première zone Z1 ainsi que, pendant une deuxième période P2, un deuxième niveau d'énergie supérieur au premier niveau d'énergie, et
- au deuxième tapis 40, pendant une troisième période P3, un niveau d'énergie ajusté pour provoquer un dégivrage au moins au niveau du deuxième tapis 40, le deuxième tapis 40 n'étant pas alimenté le reste du temps.

Selon une configuration, la troisième période P3 est postérieure à la deuxième période P2. Cette troisième période P3 est déclenchée à la fin de la deuxième période P2 ou juste après. Les deuxième et troisième périodes P2 et P3 sont les plus courtes possible. Ainsi, la deuxième période P2 représente moins de 25% de la somme des première et deuxième périodes P1, P2. A titre indicatif, la deuxième période P2 représente de l'ordre de 10% de la somme des première et deuxième périodes P1, P2. Les deuxième et troisième périodes P2, P3 ont sensiblement les mêmes durées.

L'invention permet de réduire la somme des consommations énergétiques instantanées des premier et deuxième tapis chauffants 36, 40, à l'exception de la période courte durant laquelle le premier tapis chauffant 36 est dans le deuxième état.

Enfin, la somme maximale des consommations énergétiques ∑Q1=Q1.1+Q1.2 des premier et deuxième tapis chauffants 36, 40 fonctionnant selon l'invention étant inférieure à la somme maximale des consommations énergétiques ∑Q0=Q0.1+Q0.2 des premier et deuxième tapis chauffants 21, 22 fonctionnant selon l'art antérieur, il est possible de réduire le dimensionnement des sources d'énergie nécessaires pour alimenter les premier et deuxième tapis chauffant 36, 40, dimensionnées en fonction notamment des besoins maximaux.

## Revendications

1. Procédé de fonctionnement d'un système de traitement du givre (30) recouvrant une surface (S26) d'un aéronef sur laquelle s'écoule un flux d'air d'amont en aval en fonctionnement, ladite surface (S26) comportant des première et deuxième zones (Z1, Z2), les première et deuxième zones (Z1, Z2) étant adjacentes et séparées par une ligne de jonction (32), le système de traitement du givre (30) étant configuré pour, en fonctionnement, empêcher la formation de givre sur la première zone (Z1) et temporairement tolérer de petits amas de givre ou de glace (34) sur la deuxième zone (Z2), le système de traitement du givre (30) comprenant au moins deux tapis chauffants (36, 40) parmi un premier tapis chauffant (36), recouvrant la première zone (Z1), configuré pour occuper un premier état, pendant une première période (P1), lors duquel le premier tapis chauffant (36) est alimenté électriquement à un premier niveau d'énergie de manière à maintenir une première température (T1) positive sur la première zone (Z1) de la surface (S26), et un deuxième tapis chauffant (40), recouvrant partiellement la deuxième zone (Z2), configuré pour occuper alternativement un état activé assurant un dégivrage au niveau de la surface (S26) au droit du deuxième tapis chauffant (40) ainsi qu'un état désactivé dans lequel le deuxième tapis chauffant (40) n'assure pas de dégivrage au niveau de la surface (S26), le deuxième tapis chauffant (40) étant positionné en aval du premier tapis chauffant (36) ; **caractérisé en ce que** le premier tapis chauffant (36) recouvre une zone intermédiaire (38) de la deuxième zone (Z2), **en ce que** le premier niveau d'énergie est ajusté de manière à autoriser la formation de givre sur au moins une partie de la zone intermédiaire (38), **en ce que** le premier tapis chauffant (36) est configuré pour occuper au moins un deuxième état lors duquel le premier tapis chauffant (36) est alimenté électriquement, pendant une deuxième période (P2) alternée avec la première période (P1), à un deuxième niveau d'énergie supérieur au premier niveau d'énergie et ajusté de manière à engendrer une température positive sur la zone intermédiaire (38) et **en ce que** le procédé de fonctionnement comprend un basculement du premier tapis chauffant (36) du premier état vers le deuxième état juste avant ou au même moment qu'un basculement du deuxième tapis chauffant (40) de l'état désactivé à l'état activé.

2. Procédé de fonctionnement d'un système de traitement du givre selon la revendication 1, **caractérisé en ce que** pendant la première période (P1) le premier tapis chauffant (36) occupe le premier état et le deuxième tapis chauffant (40) est à l'état désactivé, pendant la deuxième période (P2) le premier tapis chauffant (36) occupe le deuxième état et le deuxième tapis chauffant (40) est à l'état désactivé et le procédé comprend en outre une troisième période (P3) lors de laquelle le premier tapis chauffant (36) occupe le premier état et le deuxième tapis chauffant est à l'état activé.

3. Procédé de fonctionnement d'un système de traitement du givre selon l'une des revendications précédentes, **caractérisé en ce que** le premier tapis chauffant (36) est dans le deuxième état pendant des durées (D36) courtes, représentant moins de 25% du temps en fonctionnement du premier tapis chauffant (36), régulièrement espacées dans le temps.

4. Paroi extérieure d'un aéronef comprenant une surface (S26) sur laquelle s'écoule un flux d'air d'amont en aval en fonctionnement, ladite surface (S26) comportant des première et deuxième zones (Z1, Z2), les première et deuxième zones (Z1, Z2) étant adjacentes et séparées par une ligne de jonction (32), la paroi extérieure comportant au moins un système de traitement du givre (30) recouvrant la surface (S26) configuré pour, en fonctionnement, empêcher la formation de givre sur la première zone (Z1) et temporairement tolérer de petits amas de givre ou de glace (34) sur la deuxième zone (Z2), le système de traitement du givre (30) comprenant au moins deux tapis chauffants (36, 40) parmi un premier tapis chauffant (36) recouvrant la première zone (Z1), un deuxième tapis chauffant (40) recouvrant partiellement la deuxième zone (Z2) et positionné en aval du premier tapis chauffant (36), au moins une alimentation en énergie reliée aux premier et deuxième tapis chauffants (36, 40) ainsi qu'une commande pilotant l'alimentation en énergie ; **caractérisée en ce que** le premier tapis chauffant (36) recouvre une zone intermédiaire (38) de la deuxième zone (Z2) **en ce que** la commande est paramétrée pour contrôler l'alimentation en énergie afin que ladite alimentation en énergie fournisse :
- au premier tapis (36), de manière alternée, pendant une première période (P1), un premier niveau d'énergie ajusté de manière à empêcher une formation de givre ou de glace sur la première zone (Z1) et permettre la formation de givre sur au moins une partie de la zone intermédiaire (38), ainsi que, pendant une deuxième période (P2), un deuxième niveau d'énergie supérieur au premier niveau d'énergie, et
- au deuxième tapis (40), pendant une troisième période (P3), un niveau d'énergie ajusté pour provoquer un dégivrage au moins au niveau du deuxième tapis (40), le deuxième tapis (40) n'étant pas alimenté le reste du temps,
et **en ce que** la commande est configurée pour commuter le premier tapis (36) du premier état vers le deuxième état juste avant ou au même moment qu'un basculement du deuxième tapis chauffant (40) de l'état désactivé à l'état activé.

5. Paroi extérieure d'un aéronef selon la revendication précédente, **caractérisée en ce que** la troisième période (P3) est postérieure à la deuxième période (P2).

6. Paroi extérieure d'un aéronef selon l'une des revendications 4 à 5, **caractérisée en ce que** les deuxième et troisième périodes (P2, P3) ont les mêmes durées.

7. Paroi extérieure d'un aéronef selon l'une des revendications 4 à 6, **caractérisée en ce que** la deuxième période (P2) représente moins de 25% de la somme des première et deuxième périodes (P1, P2).

## Patentansprüche

1. Betriebsverfahren eines Enteisungssystems (30), das eine Oberfläche (S26) eines Flugzeugs bedeckt, über die im Betrieb ein Luftstrom von stromaufwärts nach stromabwärts strömt, wobei die Oberfläche (S26) eine erste und eine zweite Zone (Z1, Z2) aufweist und wobei die erste und die zweite Zone (Z1, Z2) aneinander angrenzen und durch eine Verbindungslinie (32) voneinander getrennt sind, wobei das Enteisungssystem (30) so eingerichtet ist, dass es im Betrieb die Bildung von Eis auf der ersten Zone (Z1) verhindert und vorübergehend kleine Eis- oder Reifklumpen (34) auf der zweiten Zone (Z2) toleriert, wobei das Enteisungssystem (30) wenigstens zwei Heizmatten (36, 40) aufweist, wovon eine erste Heizmatte (36) die erste Zone (Z1) bedeckt und so eingerichtet ist, dass sie während eines ersten Zeitabschnitts (P1) einen ersten Zustand einnimmt, in dem die erste Heizmatte (36) auf einem ersten Energieniveau elektrisch versorgt wird, um eine erste Plustemperatur (T1) auf der ersten Zone (Z1) der Oberfläche (S26) aufrechtzuerhalten, und wovon eine zweite Heizmatte (40) die zweite Zone (Z2) teilweise bedeckt und so eingerichtet ist, dass sie abwechselnd einen aktivierten Zustand einnimmt, der eine Enteisung im Bereich der Oberfläche (S26) an der zweiten Heizmatte (40) gewährleistet, sowie einen deaktivierten Zustand, in dem die zweite Heizmatte (40) keine Enteisung auf der Oberfläche (S26) gewährleistet, wobei die zweite Heizmatte (40) stromabwärts von der ersten Heizmatte (36) angeordnet ist, **dadurch gekennzeichnet, dass** die erste Heizmatte (36) einen Zwischenbereich (38) der zweiten Zone (Z2) bedeckt, dass das erste Energieniveau so eingestellt ist, dass es die Bildung von Eis auf wenigstens einem Teil des Zwischenbereichs (38) zulässt, dass die erste Heizmatte (36) so eingerichtet ist, dass sie wenigstens einen zweiten Zustand einnimmt, in dem die erste Heizmatte (36) während einem sich mit dem ersten Zeitabschnitt (P1) abwechselnden Zeitabschnitt (P2) mit einem zweiten Energieniveau elektrisch versorgt wird, das so eingestellt ist, dass eine Plustemperatur über dem Zwischenbereich (38) erzeugt wird, und dass das Betriebsverfahren ein Umschalten der ersten Heizmatte (36) vom ersten Zustand in den zweiten Zustand unmittelbar vor oder zur gleichen Zeit wie ein Umschalten der zweiten Heizmatte (40) vom deaktivierten Zustand in den aktivierten Zustand aufweist.

2. Betriebsverfahren eines Enteisungssystems nach Anspruch 1, **dadurch gekennzeichnet, dass** während eines ersten Zeitabschnitts (P1) die erste Heizmatte (36) den ersten Zustand einnimmt und sich die zweite Heizmatte (40) im deaktivierten Zustand befindet, dass während eines zweiten Zeitabschnitts (P2) die erste Heizmatte (36) den zweiten Zustand einnimmt und sich die zweite Heizmatte (40) im deaktivierten Zustand befindet, und dass das Verfahren ferner einen dritten Zeitabschnitt (P3) aufweist, in dem die erste Heizmatte (36) den ersten Zustand einnimmt und sich die zweite Heizmatte im aktivierten Zustand befindet.

3. Betriebsverfahren eines Enteisungssystems nach einem der vorhergehenden Ansprüche, **dadurch gekennzeichnet, dass** sich die erste Heizmatte (36) für kurze Zeiträume (D36), die weniger als 25% der Betriebszeit der ersten Heizmatte (36) ausmachen und die zeitlich gleichmäßig beabstandet sind, im zweiten Zustand befindet.

4. Außenwand eines Luftfahrzeugs mit einer Oberfläche (S26), über die im Betrieb ein Luftstrom von stromaufwärts nach stromabwärts strömt, wobei die Oberfläche (S26) eine erste und eine zweite Zone (Z1, Z2) aufweist und wobei die erste und die zweite Zone (Z1, Z2) aneinander angrenzen und durch eine Verbindungslinie (32) getrennt sind, wobei die Außenwand wenigstens ein Enteisungssystem (30) aufweist, das die Oberfläche (S26) bedeckt und eingerichtet ist, um im Betrieb, die Bildung von Reif auf der ersten Zone (Z1) zu verhindern und vorübergehend kleine Reif- oder Eisklumpen (34) auf der zweiten Zone (Z2) zu tolerieren, wobei das Enteisungssystem (30) wenigstens zwei Heizmatten (36, 40) aufweist, wovon eine erste Heizmatte (36) die erste Zone (Z1) bedeckt und wovon eine zweite Heizmatte (40) die zweite Zone (Z2) teilweise bedeckt und stromabwärts der ersten Heizmatte (36) angeordnet ist, mit wenigstens einer Energieversorgung, die mit der ersten und der zweiten Heizmatte (36, 40) verbunden ist, sowie mit einer Steuerung, die die Energieversorgung steuert, **dadurch gekennzeichnet, dass** die erste Heizmatte (36) einen Zwischenbereich (38) der zweiten Zonen (Z2) abdeckt und dass die Steuerung so parametriert ist, dass sie die Energiezufuhr so steuert, dass die Energiezufuhr liefert:
- an die erste Matte (36) abwechselnd während einem ersten Zeitabschnitt (P1) ein erstes Energieniveau, das so eingestellt ist, dass es die Bildung von Reif oder Eis auf der ersten Zone (Z1) verhindert und die Bildung von Reif auf wenigstens einem Teil des Zwischenbereichs (38) zulässt, sowie während einem zweiten Zeitabschnitt (P2) ein zweites Energieniveau, das höher als das erste Energieniveau ist, und
- an die zweite Matte (40) während einem dritten Zeitabschnitt (P3) ein Energieniveau, das so eingestellt ist, dass es ein Abtauen zumindest an der zweiten Matte (40) bewirkt, wobei die zweite Matte (40) während der restlichen Zeit nicht mit Energie versorgt wird,
und dass die Steuerung dazu eingerichtet ist, die erste Heizmatte (36) vom ersten Zustand in den zweiten Zustand umzuschalten, unmittelbar bevor oder gleichzeitig zu einem Umschalten der zweiten Heizmatte (40) vom deaktivierten Zustand zum aktivierten Zustand.

5. Außenwand eines Luftfahrzeugs nach dem vorhergehenden Anspruch, **dadurch gekennzeichnet, dass** der dritte Zeitabschnitt (P3) später als der zweite Zeitabschnitt (P2) ist.

6. Außenwand eines Luftfahrzeugs nach einem der Ansprüche 4 bis 5, **dadurch gekennzeichnet, dass** der zweite und dritte Zeitabschnitt (P2, P3) die gleiche Dauer haben.

7. Außenwand eines Luftfahrzeugs nach einem der Ansprüche 4 bis 6, **dadurch gekennzeichnet, dass** der zweite Zeitabschnitt (P2) weniger als 25% der Summe der ersten und zweiten Zeitabschnitte (P1, P2) ausmacht.

## Claims

1. Method for operating a frost treatment system (30) covering a surface (S26) of an aircraft over which an air stream flows from upstream to downstream in operation, said surface (S26) comprising first and second zones (Z1, Z2), the first and second zones (Z1, Z2) being adjacent and separated by a junction line (32), the frost treatment system (30) being configured to, in operation, prevent the formation of frost on the first zone (Z1) and temporarily tolerate small masses of frost or of ice (34) on the second zone (Z2), the frost treatment system (30) comprising at least two heating mats (36, 40) including a first heating mat (36), covering the first zone (Z1), configured to occupy a first state, during a first period (P1), in which the first heating mat (36) is electrically powered at a first energy level so as to maintain a first positive temperature (T1) on the first zone (Z1) of the surface (S26), and a second heating mat (40), partially covering the second zone (Z2), configured to alternately occupy an activated state ensuring a defrosting on the surface (S26) in line with the second heating mat (40) and a deactivated state in which the second heating mat (40) does not ensure defrosting on the surface (S26), the second heating mat (40) being positioned downstream of the first heating mat (36); wherein the first heating mat (36) covers an intermediate zone (38) of the second zone (Z2), the first energy level is adjusted so as to allow the formation of frost on at least a part of the intermediate zone (38), the first heating mat (36) is configured to occupy at least one second state in which the first heating mat (36) is electrically powered, during a second period (P2) alternating with the first period (P1), at a second energy level higher than the first energy level and adjusted so as to generate a positive temperature on the intermediate zone (38) and the operating method comprises a switchover of the first heating mat (36) from the first state to the second state just before or at the very moment of a switchover of the second heating mat (40) from the deactivated state to the activated state.

2. Method for operating a frost treatment system as claimed in claim 1, wherein during the first period (P1) the first heating mat (36) occupies the first state and the second heating mat (40) is in the deactivated state, during the second period (P2) the first heating mat (36) occupies the second state and the second heating mat (40) is in the deactivated state and the method further comprises a third period (P3) during which the first heating mat (36) occupies the first state and the second heating mat is in the activated state.

3. Method for operating a frost treatment system as claimed in one of the preceding claims, wherein the first heating mat (36) is in the second state for short durations (D36), representing less than 25% of the time in operation of the first heating mat (36), regularly spaced apart in time.

4. Outer wall of an aircraft comprising a surface (S26) over which an air stream flows from upstream to downstream in operation, said surface (S26) comprising first and second zones (Z1, Z2), the first and second zones (Z1, Z2) being adjacent and separated by a junction line (32), the outer wall comprising at least one frost treatment system (30) covering the surface (S26) configured to, in operation, prevent the formation of frost on the first zone (Z1) and temporarily tolerate small masses of frost or of ice (34) on the second zone (Z2), the frost treatment system (30) comprising at least two heating mats (36, 40) including a first heating mat (36) covering the first zone (Z1), a second heating mat (40) partially covering the second zone (Z2) and positioned downstream of the first heating mat (36), at least one energy supply linked to the first and second heating mats (36, 40) and a control driving the energy supply; wherein the first heating mat (36) covers an intermediate zone (38) of the second zone (Z2), in that the control is parameterized to control the energy supply in order for said energy supply to supply:
- to the first mat (36), alternately, during a first period (P1), a first energy level adjusted so as to prevent a formation of frost or of ice on the first zone (Z1) and allow the formation of frost on at least part of the intermediate zone (38), and, during a second period (P2), a second energy level greater than the first energy level, and
- to the second mat (40), during a third period (P3), an energy level adjusted to provoke a defrosting at least on the second mat (40), the second mat (40) not being powered for the remainder of the time,
and in that the control is configured to switch the first mat (36) from the first state to the second state just before or at the same time as a switchover of the second heating mat (40) from the deactivated state to the activated state.

5. Outer wall of an aircraft as claimed in the preceding claim, wherein the third period (P3) is after the second period (P2).

6. Outer wall of an aircraft as claimed in one of claims 4 and 5, wherein the second and third periods (P2, P3) have the same durations.

7. Outer wall of an aircraft as claimed in one of claims 4 to 6, wherein the second period (P2) represents less than 25% of the sum of the first and second periods (P1, P2).
